# EUROPEAN PATENT APPLICATION

(11) **EP 3 189 957 A1**
(43) Date of publication of application: **12.07.2017**
(21) Application number: 16199626.9
(22) Date of filing: 18.11.2016
(51) Int. Cl.: B29C 53/80, B29D 30/14, B29D 30/28, B29D 30/60, B29K 105/24, B29K 21/00

(54) **METHOD AND MACHINE FOR APPLYING STRIP SHAPED ELASTOMERIC MATERIAL FOR PROFILES PRODUCTION**

(30) Priority: 19.11.2015 SK 501092015 U
(71) Applicant: Konstrukta Industry, a.s, 912 50 Trencin (SK)
(72) Inventor: Kaprálik, Mário, 020 01 Strezenice (SK); Sedivý, Vladimír, 913 32 Dolná Súca (SK)

(57) **Abstract**

Method for applying of strip shaped elastomeric material for profiles production is described where a torque in strip shaped elastomeric material application point (BB) onto cylindrical or toroidal base surface relative to its horizontal axis of rotation (B) is transferred by means of transmission from horizontal axis (A) of movement trajectory of horizontal axis (B), and force in application point (BB) to the cylindrical or toroidal base surface is acting perpendicularly to the horizontal rotation axis (B) of application point (BB) and machine for carrying out of this method.

## Description

### Technical field

The present invention relates to method and machine for applying of strip shaped elastomeric material for profiles production onto cylindrical or toroidal shaped base surface, preferably, but not necessarily a tyre.

### Background art

Known machines, rubberizing rotating base surface by strip shaped elastomeric material in the form of a spiral are positioned in perpendicular and parallel direction to rotating base surface axis of rotation, or in combination with an application device rotational movement.

Narrow strip, made of elastomeric material by means of extrusion machine and shaped passing through an extrusion die or roll shaping device as well, or unwound from unwinding device, is transported onto application wheel of application device. Strip shaped elastomeric material passes from application wheel to cylindrical or toroidal shaped base surface in the form of a spiral with a defined pitch, while creating of resulting profile according to the determined law.

There are two axes control systems according to controlled movement directions, positioned linearly in two perpendicular directions of horizontal plane, or linearly in one direction of horizontal plane and rotationally around device vertical axis of rotation. Three axes controlled systems are positioned linearly in two perpendicular directions of horizontal plane and rotationally around device vertical axis of rotation.

Known machines, rubberizing rotating base surface by a strip shaped elastomeric material in the form of a spiral controlled in two or three axes are using a linear type of application wheel dumping movement. If a driving element of application roll is used and it is a part of the moving mechanism, it increases a moment inertia causing the large mechanical stress with possible oscillation. If the application roll driving element is out of the moving part, it is necessary to compensate transmission length.

Once the strip shaped elastomeric material strip is applied on the base surface, its surface is additionally stitched by stitching element, usually consists of set of rotating parts, pulleys or rolls. In case of the large distance between the application point and additional stitching point of the applied strip shaped elastomeric material, this solution comes to width restrictions. Stitching element has to be very wide, that makes flexibility worse.

In case of very curved shapes, for example side of the tyre, waving of applying strip shaped elastomeric material due to stress relaxation delay occurs. It is possible to prevent it by delayed stitching. That again requires longer distance between application point and additional stitching point.

### Disclosure of invention

The object of the present invention is to provide a method for applying of strip shaped elastomeric material for profiles production passing form application roll onto cylindrical or toroidal shaped base surface, while torque in application point on the surface of the application roll relative to its axis of rotation is transferred from driving unit by means of transmission. Because the base surface is not ideally flat, application roll is dumping on it by means of hang arm design. For torque from driving unit to application roll transmission, a hinging arm axis of rotation is used. To remain a stable position of the application point, the application roll is urged into contact with a strip shaped elastomeric material applied on the cylindrical or toroidal base surface, with a determined pressure by pushing element with resulting force perpendicular to application roll axis of rotation.

Method of positioning of additional contact point of stitching element and strip shaped elastomeric material applied on cylindrical or toroidal base surface in horizontal plane is positioned by combination of rotational and linear motion. Rotational motion is performed around stitching element trajectory axis of rotation, linear motion is perpendicular to stitching element trajectory axis of rotation and perpendicular to application roll axis of rotation. This helps to stabilize position of contact point on strip shaped elastomeric material applied on cylindrical or toroidal base surface with defined geometrical arrangement, important for precise position calculation.

Within this technical task, the present invention aims at designing of the machine for applying of strip shaped elastomeric material for profiles production, comprising application roll mounted on hinging arm, located on main frame. There is a driving unit for application roll drive fixed on main frame, connected with application roll by means of transmission, using rotating shaft located in axis of rotation of hinging arm. This solution allows torque transmission form fixed driving unit onto application roll located on hinging arm with no transmission length compensation when changing distance between application roll and driving unit. Stable position of application roll and base surface contact point is ensured by pushing element, preferable pneumatic, urging application roll in application point on cylindrical or toroidal base surface. Machine comprises stitching element in contact with strip shaped elastomeric material applied on cylindrical or toroidal base surface. Stitching element is positioned rotationally by means of rotational positioning unit around stitching element trajectory axis of rotation and linearly by means of pushing element in perpendicular direction to stitching element trajectory axis of rotation and perpendicularly to application roll axis of rotation.

This solution offers very small dimensions with wide range of movement and proper mass distribution. Small overall dimensions resulting into lower moment of inertia of moving part, in compare with known solutions.

Alternative solution of stitching element comprises multiple stitching rotation parts system, positioned linearly by one or more pushing elements of stitching element perpendicularly to the application roll axis of rotation.

### Brief description of the drawings

The present invention will now be described with reference to enclosed sketches, which illustrate nonlimitative embodiment, in which
- figure 1 shows schematically preferred embodiment according to present invention
- figure 2 shows stitching element comprising more horizontally located rotating parts.

### Best mode for carrying out the invention:

### Example 1

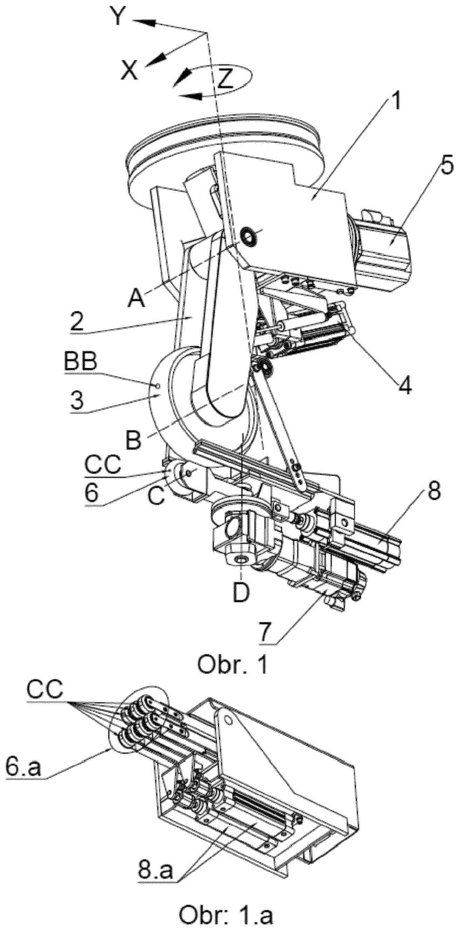

This way of carrying out the invention describes machine for applying of strip shaped elastomeric material for profiles production with reference to the FIG. 1.

Machine for applying of strip shaped elastomeric material for profiles production fixed by means of main frame **1** on unshown base construction, positioned linearly in horizontal plane in two perpendicular directions and rotationally around vertical axis. Strip shaped elastomeric material led into machine vertical axis of rotation, through application roll **3** is transported onto cylindrical or toroidal base surface in application point **BB.** Application point **BB** movement with reference to main frame during application process is compensated by rotational movement of hinging arm **2** around its axis of rotation **A.** Torque, on the surface of application roll **3** relative to its axis of rotation **B** in application point **BB** is from driving unit **5** transferred by means of proper transmission, by use of shaft located in hinging arm axis of rotation **A.** Application roll **3** pushing force to toroidal or cylindrical base surface in application point **BB** is perpendicular to the application roll axis of rotation **B** and comes from pushing element **4**.

### Example 2

This way of carrying out the invention describes machine for applying of strip shaped elastomeric material for profiles production with reference to the FIG. 1.

There is sufficiently described a design principle in example 1. The main difference is in positioning of the machine for applying of strip shaped elastomeric material for profiles production hang on supporting frame by linear motion in horizontal plane, in two reciprocally perpendicular directions. Flexible movement of the application roll **3**, fixed on hinging arm **2** and transfer of torque from driving unit **5** to application roll **3** surface is described in example 1.

### Example 3

This way of carrying out the invention describes machine for applying of strip shaped elastomeric material for profiles production with reference to the FIG. 1.

There is sufficiently described design principle in example 1. The main difference is in positioning of the machine for applying of strip shaped elastomeric material for profiles production hanged on supporting frame by linear motion in horizontal plane in one direction and rotation motion around its vertical axis.

Flexible movement of the application roll **3**, fixed on hinging arm **2** and transfer of torque from driving unit **5** to application roll **3** surface is described in example 1.

### Example 4

This way of carrying out the invention describes the machine for applying of strip shaped elastomeric material for profiles production with reference to the one of examples 1, 2, 3, comprising stitching element **6**, pushing a strip shaped elastomeric material applied on cylindrical or toroidal base surface in additional contact point **CC** in defined position, while position of additional contact point **CC** of stitching element **6** is changing in horizontal direction by combination of rotation motion around stitching element trajectory axis of rotation **D** and linear motion perpendicular to stitching element trajectory axis of rotation **D** and perpendicular to the application roll axis of rotation **B**.

### Example 5

This way of carrying out the invention describes machine for applying of strip shaped elastomeric material for profiles production according to example 1, 2, 3 comprising a stitching element **6.a** consists of one or more horizontally placed rotational elements, and one or more stitching roll pushing elements **8.a** of stitching element **6.a** for stitching of strip shaped elastomeric material applied on cylindrical or toroidal base surface in additional contact point **CC.**

## Claims

1. A method for applying of strip shaped elastomeric material for profiles production, wherein a torque in strip shaped elastomeric material application point (BB) onto cylindrical or toroidal base surface relative to its horizontal axis of rotation (B) is transferred by means of transmission from horizontal axis (A) of movement trajectory of horizontal axis (B), and force in application point (BB) to the cylindrical or toroidal base surface is acting perpendicularly to the horizontal rotation axis (B) of application point (BB).

2. A method for applying of strip shaped elastomeric material for profiles production according to claim 1, wherein positioning of the additional contact point (CC) in horizontal direction is combination of rotation motion around stitching element axis of rotation (D) and linear motion perpendicular to the horizontal rotation axis (A).

3. A machine for applying of strip shaped elastomeric material for profiles production, comprising application roll (3) rotating around axis (B) forced in direction of plane defined by (Y), (Z) axes by pushing element (4) by rotation around axis (A) against main frame (1) and torque on the surface of application roll (3) from driving unit (5) is transferred through the shaft located in hinging arm axis of rotation (A) by means of proper transmission.

4. A machine for applying of strip shaped elastomeric material for profiles production according to claim 3, comprising stitching element (6) positioned in horizontal direction by rotation motion around axis (D), perpendicular to axis (B) and linear motion perpendicular to axis (D) and perpendicular to axis (A) by means of stitching roll pushing element (8).

5. A machine for applying of strip shaped elastomeric material for profiles production according to claim 3, comprising stitching element (6.a) consists of one or more rotational elements in contact with cylindrical or toroidal base surface moving in direction given by plane defined by (Y) and (Z) axis perpendicularly to axis (D).
